# EUROPÄISCHE PATENTSCHRIFT

(11) **EP 1 292 075 B1**
(45) Veröffentlichungstag und Bekanntmachung des Hinweises auf die Patenterteilung: **27.06.2012**
(21) Anmeldenummer: 02102263.7
(22) Anmeldetag: 02.09.2002
(51) Int. Cl.: H04L 12/56, H04M 7/00

(54) **Verfahren zur Leitweglenkung von Datenpaketen**
Method for the routing of packets
Méthode de direction d'itinéraire de paquets

(30) Priorität: 10.09.2001 DE 10144356
(43) Veröffentlichungstag der Anmeldung: 12.03.2003
(73) Patentinhaber: Siemens Enterprise Communications GmbH & Co. KG, 81379 München (DE)
(72) Erfinder: Westermeier, Robert, 82054 Sauerlach (DE)
(74) Vertreter: Fritzsche, Thomas

(56) Entgegenhaltungen:
- EP-A- 0 920 176
- WO-A-01/52476
- WO-A-99/25102

## Beschreibung

Die Erfindung betrifft ein Verfahrenen zur Leitweglenkung von Datenpaketen in einem paketvermittelnden Netzwerk.

In heutigen Telekommunikationsnetzen sind Kommunikationsverbindungen überwiegend verbindungsorientiert realisiert. Bei einer derartigen verbindungsorientierten Kommunikationsverbindung ist für eine Signalübertragung zwischen zwei Kommunikationsendpunkten ausschließlich eine festzugeordnete "Leitung" vorgesehen, die für diese Kommunikationsverbindung reserviert ist. Wenngleich in modernen - eine Vermittlung von zugeordneten Kommunikationsendpunkten realisierenden - Kommunikationseinrichtungen keine physikalisch reservierte Leitung bei einer bestehenden Kommunikationsverbindung existiert, werden in der Literatur dem Fachmann auch als "zeitschlitzorientiert" geläufige Kommunikationsverbindungen zu den verbindungsorientierten Kommunikationsverbindungen gezählt.

Eine Alternative zu der eingangs erwähnten verbindungsorientierten Kommunikationsverbindung ist eine paketvermittelnde Kommunikationsverbindung. Mit einem zunehmenden Ausbau paketvermittelnder Netzwerke, wie beispielsweise dem Internet oder räumlich begrenzten Netzwerken - in der Fachwelt oftmals als "Local Area Network (LAN)" bezeichnet - ist in vielen Fällen eine - im Vergleich mit einem verbindungsorientierten Kommunikationsnetzwerk - wirtschaftlichere Variante einer Telekommunikationsinfrastruktur möglich. Dies liegt auch in einer besseren Nutzungseffizienz von zur Verfügung stehenden Verbindungsressourcen begründet, da z.B. Übertragungskapazitäten mittels einer paketvermittelnden Übertragung weitaus effizienter genutzt werden können, als dies bei einer verbindungsorientierten Übertragung mit zugesicherter Leitungskapazität möglich ist.

In paketvermittelnden Kommunikationsnetzwerken wird die Vermittlung von Kommunikationspartnern nicht durch eine zentrale Kommunikationseinrichtung verwaltet. Statt dessen wird die Kommunikationsverbindung durch ein wechselseitiges Senden und Empfangen von - Nutz- und Signalisierungsinformationen enthaltenden - Datenpaketen zwischen den beiden Kommunikationspartnern aufrechterhalten, wobei die einzelnen Datenpaketen u.a. Informationen über die Zieladresse des jeweils anderen Kommunikationspartners beinhalten.

Diese Art von Kommunikationsverbindungen über paketvermittelnde Netzwerke - in der Fachwelt oftmals als "Voice over IP, VoIP" bezeichnet - baut in vielen Fällen auf dem in der Fachwelt bekannten Protokollen für eine Datenkommunikation über das Internet auf, insbesondere dem sogenannten "Internet Protocol", abkürzend "IP". Für die VoIP-Kommunikation sind dabei die Protokolle H.323 bzw. SIP (Session Initiation Protocol) weit verbreitet.

SIP ist ein Signalisierungsprotokoll für Internettelephonie sowie für weitere Dienste wie Konferenzinteraktionen, Ereignisbenachrichtigung, Nachrichtenübermittlung usw. Dieses Protokoll wurde von der Arbeitsgruppe MMUSIC (Multiparty Multimedia Session Control) der Arbeitsgruppe IETF (Internet Engineering Task Force) entwickelt.

Der Standard H.323 ist ein internationaler ITU-T-Standard (International Telecommunication Union - Telecommunications Standardization Sector) für die Sprach-, Daten- und Videokommunikation über paketvermittelnde Netzwerke, der eine Interoperabilität der Herstellerprodukte untereinander garantiert, wobei u.a. Systembestandteile wie Kommunikationsendpunkte, Gatewayeinrichtungen und ein zentraler Leitrechner, der u.a. eine Bestimmung des Leitwegs vornimmt - oftmals auch als Gatekeeper bezeichnet - für ein Kommunikationssystem nach diesem Standard definiert sind.

Ein Kommunikationsendpunkt (Terminal) ist ein den Standards H.323 bzw. SIP entsprechend ausgestalteter Kommunikationsendpunkt.

Unter einer Gatewayeinrichtung (oder Gateway) versteht man eine Hardware- bzw. Softwarekonfiguration, die eine Verbindung verschiedener Netzwerke miteinander bewerkstelligt. Somit besitzt eine Gatewayeinrichtung die Aufgabe, Datenpakete von einem Netzwerk in ein anderes zu übermitteln, wofür vor allem eine Umsetzung zwischen in den verbundenen Netzwerken verwendeten Kommunikationsprotokolle notwendig ist. Diese Umsetzung kann dabei insbesondere auch in ein Protokoll erfolgen, dass nicht nach dem Prinzip der Paketvermittlung arbeitet, beispielsweise einem ISDN-Protokoll (Integrated Services Digital Network). In solcher Weise sind Gatewayeinrichtungen häufig zwischen einem paketvermittelnden Netzwerk - beispielsweise einem LAN - und einer Kommunikationseinrichtung, wie etwa einer nach einem zeitschlitzorientierten Verfahren arbeitenden Vermittlungseinrichtung - in der Fachwelt oftmals als "Private Branch Exchange, PBX" bezeichnet - angeordnet.

Der zentrale Leitrechner für die Bestimmung des Leitwegs schließlich ist eine zentrale Steuerungseinheit, die u.a. eine Leitweglenkung - in der Fachwelt auch als "Routing" bezeichnet - eine Rufsignalisierung sowie eine Zuordnung von Rufnummern und IP-Adressen des Kommunikationsnetzes beziehungsweise deren Umwandlung steuert. Im folgenden wird unter Bezugnahme auf die Funktionalität der Leitwegebestimmung von einem Routingserver gesprochen. Dieser Routingserver ist weiterhin auch für eine Zugangsberechtigung zum Kommunikationsnetz verantwortlich.

Die Leitweglenkung eines Routingservers beschränkt sich nicht alleine auf den Austausch von Signalisierungsinformation, sondern umfasst alle zwischen Kommunikationsendpunkten eines Kommunikationsnetzwerkes ausgetauschten Datenpakete, also auch Datenpakete, die eigentliche Nutzinformationen (wie z.B. Sprach- oder Videodaten) enthalten.

In vielen Anwendungsfällen existieren zu einem paketvermittelnden Netzwerk mehrere - durch Gatewayeinrichtungen verbundene - Übergangsstellen zu verbindungsorientiert arbeitenden Kommunikationseinrichtungen.

Eine Ausgestaltung eines paketvermittelnden Netzwerks mit Gateways zu einem verbindungsorientierten Kommunikationssystem ist beispielsweise aus der Druckschrift WO99/25102 bekannt. In einem dort offenbarten System wird aus einer Mehrzahl zwischen einem verbindungsorientierten und einem paketvermittelnden Kommunikationssystem verbindenden Gateways ein gewünschtes Gateway manuell von einem Endgeräteteilnehmer ausgewählt, indem von einem rufenden Teilnehmer bei einer Anwahl eines zu rufenden Teilnehmers ein Präfix vor der Teilnehmernummer des zu rufenden Teilnehmers in Form einer Ziffernfolge eingefügt wird.

Die Gatewayeinrichtungen verwalten ein Kommunikationsnetz, das beispielsweise nach dem ISDN-Protokoll arbeitet. Das ISDN-Protokoll ist durch eine Trennung von Nutzinformationen - z.B. Sprach- und/oder Videokommunikationsdaten - in einen oder mehrere sogenannte B-Kanäle und Signalisierungsinformationen in einem sogenannten D-Kanal gekennzeichnet. Die Signalisierungsinformationen enthalten Daten zur Verbindungssteuerung, Signalisierung usw. Darüber hinaus werden in modernen Kommunikationssystemen u.a. weitere Daten auf dem D-Kanal übertragen, die erweiterte Leistungsmerkmale wie beispielsweise eine Anzeige des Namens und weiterer Informationen eines rufenden bzw. gerufenen Teilnehmers am Kommunikationsendpunkt eines gerufenen bzw. rufenden Teilnehmers ermöglichen.

Die Signalisierungsinformationen des ISDN-Protokolls weisen demgemäss viele unterschiedliche Varianten auf, von denen im folgenden lediglich drei bekannte - das QSIG-Protokoll ("Q-Interface Signalling Protocol"), das DSS1-Protokoll ("Digital Subscriber System No. 1") sowie das "1TR6"-Protokoll ("Technische Richtlinie" der Deutschen Telekom) - beschrieben werden. Darüber hinaus existiert eine Vielzahl von weiteren proprietären ISDN-Protokollen, die von Herstellern von Kommunikationseinrichtungen verwendet werden.

Das QSIG-Protokoll ist ein internationaler von der ECMA ("European Computer Manufacturers Association") definierter Signalisierungsstandard für eine logische Signalisierung zwischen zwei privaten Vermittlungsknoten, z.B. Kommunikationseinrichtungen. QSIG weist einige Grundfunktionen ("Generic Functions") auf, zu denen weitere Leistungsmerkmale hinzufügbar sind. Diese können sowohl rein QSIG-konform sein, QSIG-konform mit herstellereigenen Erweiterungen, als auch herstellerspezifisch sein.

Das DSS1-Protokoll ist ein auf ITU-T 1.411 ("International Telecommunication Union") basierendes europäisches ISDN-Protokoll für den D-Kanal des europäischen Euro-ISDN. Das DSS1-Protokoll löst das von der Deutschen Telekom benutzte 1TR6-Protokoll ab.

Das 1TR6-Protokoll ist ein nationales ISDN-Protokoll für den D-Kanal der Deutschen Telekom. Diese technische Richtlinie wird im Zuge der europäischen Harmonisierung auf das europäische o.g. Protokoll DSS1 umgestellt. Die Unterschiede zwischen beiden Protokollen liegen u.a. in der Übermittlung der Rufnummerninformationen. Des weiteren können beim 1TR6-Protokoll alle Kommunikationsendpunkte an einem ISDN-Basisanschluss sowohl eine identische Rufnummer besitzen als auch mittels einer Kommunikationsendpunkteauswahlziffer einzeln adressiert werden.

In der ITU-T-Empfehlung H.225.0, Stand November 2000, Kapitel 7.3. (Q.931 Message Details) wird im Unterpunkt 7.3.10 (Setup) ein Informationselement "desiredProtocols" offenbart, dass einen bevorzugten Protokolltyp (z.B. Sprachkommunikation oder Faxaustausch) zwischen einem die Kommunikation initiierenden und einem gerufenen Kommunikationspartner angibt. Eine ausführende Instanz kann mit Hilfe dieses Informationselements einen Kommunikationspartner lokalisieren, der diesen Protokolltyp ebenfalls unterstützt.

Während die Signale von Nutz- und Signalisierungsinformationen in klassischen ISDN-basierten Kommunikationssystemen zeitkontinuierlich übertragen werden ist in VoIP-basierten Kommunikationssystemen eine Zerlegung in einzelne, mit Zieladressen versehene Datenpakete notwendig, um die Daten der Nutz- und Signalisierungsinformationen über ein paketvermittelndes Netzwerk zu übertragen. Beim Austritt aus dem paketvermittelnden Netzwerk wird aus den Datenpaketen wieder ein kontinuierlicher Datenstrom zusammengesetzt. Im Zusammenhang mit dieser Verpackung bzw. Entpackung wird oftmals von einer "Tunnelung" (dem Fachmann auch als "Tunnelling" bekannt) gesprochen. Unter einer Tunnelung versteht man im Allgemeinen einen Transport von in einem ersten Protokoll vorliegenden Signalisierungsinformationen innerhalb eines andersgearteten, zweiten Protokolls.

Eine Leitweglenkung dieser getunnelten Datenpakete übernimmt u.a. der Routingserver. Bei der Leitweglenkung von Datenpaketen wird durch den Routingserver i.A. ein - bezüglich einer erreichbaren Übertragungsqualität - möglichst effizienter Weg durch das paketvermittelnde Netzwerk bestimmt.

Bei einer Kommunikationsverbindung zwischen zwei über Gatewayeinrichtungen mit einem paketvermittelnden Netzwerken verbundenen Kommunikationseinrichtung tritt häufig das Problem auf, dass die beide Kommunikationseinrichtungen mit verschiedenen Kommunikationsprotokollen arbeiten. Diese Protokollungleichheit kann durch Beschränkung auf Basisruffunktionen - dem Fachmann als "Basic Call Functions" bekannt - umgangen werden, was jedoch den Verlust von Leistungsmerkmalen nach sich zieht.

Aufgabe der Erfindung ist es, ein Verfahren zur Leitweglenkung anzugeben, bei dem zwischen zwei Kommunikationspartnern die volle Bandbreite an von den Kommunikationseinrichtungen zur Verfügung gestellten Leistungsmerkmalen erhalten bleibt.

Eine Lösung der Aufgabe erfolgt durch die Merkmale des Patentanspruchs 1.

Erfindungsgemäß erfolgt bei einer Leitweglenkung von zwischen zwei innerhalb verschiedener Kommunikationsnetzwerken angeordneten Kommunikationsendpunkten über ein paketvermittelndes Netzwerk ausgetauschten Datenpaketen eine Berücksichtigung der in den Kommunikationsnetzwerken verwendeten Kommunikationsprotokolle.

Ein wesentlicher Vorteil des erfindungsgemäßen Verfahrens ist darin zu sehen, dass durch die Berücksichtigung der Kommunikationsprotokolle bei der Leitweglenkung eine leistungsmerkmaltransparente Vermittlung erfolgt. Unter der Leistungsmerkmaltransparenz ist zu verstehen, dass eine Verbindung zwischen zwei identische oder gleichartige Kommunikationsprotokolle verwendende Kommunikationsendpunkte mit einem unkonvertierten Austausch von Signalisierungsinformationen erfolgen kann. Demgemäss ist an den Kommunikationsendpunkten eine Bandbreite von Leistungsmerkmalen wie bei einer kommunikationsnetzwerk-internen Verbindung verfügbar.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigt:

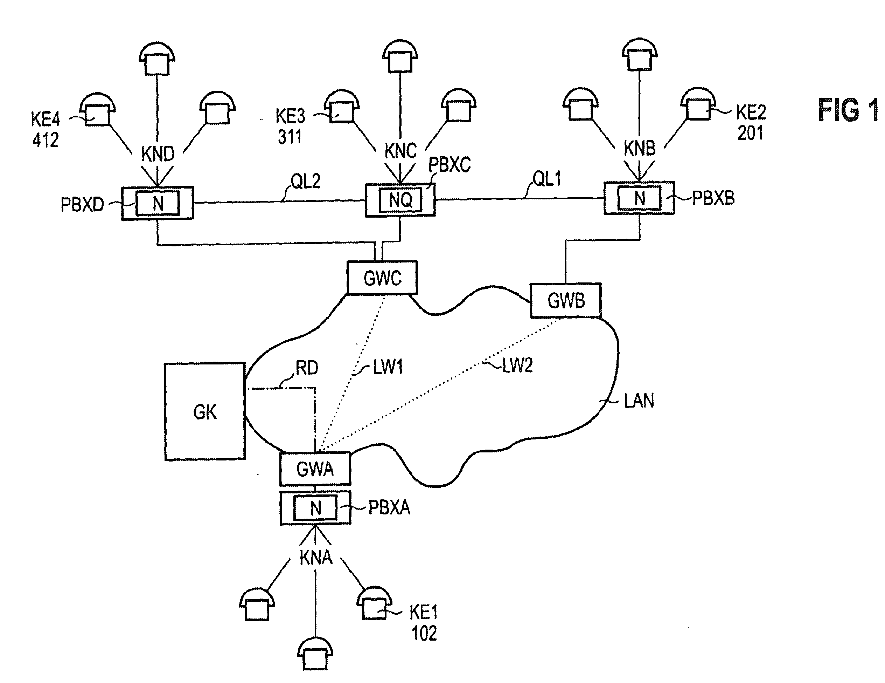

- Fig. 1:: ein Strukturbild zur schematischen Darstellung von durch ein paketvermittelndes Netzwerk verbundenen Kommunikationsnetzwerken.

Fig. 1 zeigt vier Kommunikationsnetzwerke KNA,KNB,KNC, die von einer jeweils zugehörigen zentralen Kommunikationseinrichtung PBXA,PBXB,PBXC,PBXD und mehreren Kommunikationsendpunkten gebildet werden. Die Kommunikationsnetzwerke KNA,KNB,KNC arbeiten beispielsweise auf Basis eines ISDN-Protokolls.

In jedem Kommunikationsnetzwerk KNA,KNB,KNC,KND wurde zur Vereinfachung der Bezugnahme lediglich jeweils ein Kommunikationsendpunkt mit einem Bezugszeichen versehen. Im ersten Kommunikationsnetz KNA ist ein erster Kommunikationsendpunkt KE1 mit einer Rufnummer "102" gekennzeichnet, im zweiten Kommunikationsnetz KNB ist ein zweiter Kommunikationsendpunkt KE2 mit der Rufnummer "201", im dritten Kommunikationsnetz KNC ist ein dritter Kommunikationsendpunkt KE3 mit der Rufnummer "311" und im vierten Kommunikationsnetz KND ist ein vierter Kommunikationsendpunkt KE4 mit der Rufnummer "412" gekennzeichnet.

Die erste, zweite und die vierte Kommunikationseinrichtung PBXA,PBXB,PBXD arbeiten mit einem ersten Kommunikationsprotokoll N, während die dritte Kommunikationseinrichtung PBXC mit einem vom ersten Kommunikationsprotokoll N abweichenden, zweiten Kommunikationsprotokoll NQ arbeitet. Diese Kommunikationsprotokolle N,NQ sind z.B. in einer Vermittlungs- und Leistungsmerkmalsteuerung der jeweiligen Kommunikationseinheit PBXA,PBXB,PBXC implementiert. Die Implementierung der Kommunikationsprotokolle N;NQ in der jeweiligen Kommunikationseinrichtung PBXA,PBXB,PBXD;PBXC hat Auswirkungen auf das Format der Signalisierungsinformationen im jeweiligen Kommunikationsnetzwerk KNA,KNB,KND;KNC und beeinflusst somit u.U. auch die software- und/oder hardwaretechnische Ausgestaltung der im jeweiligen Kommunikationsnetzwerk KNA,KNB,KND;KNC vorhandenen Kommunikationsendpunkte. Bei einer Kommunikationsverbindung zwischen zwei Kommunikationsendpunkten mit einem identischen Kommunikationsprotokoll wird im Allgemeinen von einer "leistungsmerkmaltransparenten" Kommunikationsverbindung gesprochen, da in diesem Fall an beiden Kommunikationsendpunkten die gleichen Leistungsmerkmalen mit identischen Signalisierungsinformationen bei einem Aufruf des jeweiligen Leistungsmerkmals zur Verfügung stehen.

Die erste und zweite Kommunikationseinrichtung PBXA,PBXB sind über eine jeweils zugehörige Gatewayeinrichtung GWA,GWB mit einem paketvermittelnden Netzwerk LAN verbunden. Die dritte und vierte Kommunikationseinrichtung PBXC,PBXD sind über eine gemeinsame Gatewayeinrichtung GWC mit dem paketvermittelnden Netzwerk LAN verbunden. Die Zuordnung der ersten beiden Kommunikationseinrichtungen PBXA,PBXB zu jeweils einer Gatewayeinrichtung GWA,GWB ist für eine vereinfachte Darstellung gewählt, in der technischen Praxis sind - analog der an die Gatewayeinrichtung GWC gemeinsam angeschlossenen Kommunikationseinrichtungen PBXC,PBXD - häufig mehrere Kommunikationseinrichtungen mit einer Gatewayeinrichtung verbunden.

Die zweite und dritte Kommunikationseinrichtung PBXB,PBXC sowie die dritte und vierte Kommunikationseinrichtung PBXC,PBXD sind jeweils über Querverbindungen QL1,QL2 miteinander verbunden. Unter Verwendung der Querverbindung QL1 ist z.B. eine Verbindung des zweiten Kommunikationsendpunkts KE2 mit dem dritten Kommunikationsendpunkt KE3 ohne Verwendung eines Leitweges über das paketvermittelnde Netzwerk LAN möglich. Diese Querverbindungen QL1,QL2 sind als exemplarisches Beispiel für eine weitergehende - in der Realität komplexere und engmaschigere - Vernetzung von Kommunikationseinrichtungen zu sehen.

Während Kommunikationsdaten in den ISDN-basierten Kommunikationsnetzwerken KNA,KNB,KNC,KND zeitkontinuierlich übertragen werden ist über das paketvermittelnde Netzwerk LAN eine Tunnelung der Kommunikationsdaten notwendig. Hierzu wird u.a. eine Zerlegung der zeitkontinuierlichen Kommunikationsdaten in einzelne Datenpakete und eine Ziel-Adressierung dieser Datenpakete mit der IP-Nummer (Internet Protocol) des verbundenen Kommunikationsendpunktes sowie in umgekehrter Richtung - vom paketvermittelnden Netzwerk LAN in Richtung eines der Kommunikationsnetzwerke KNY,KNB,KNC,KND - eine Umsetzung der für den im jeweiligen Kommunikationsnetzwerk KNY,KNB,KNC,KND angeordneten Kommunikationsendpunkt bestimmten Datenpakete in einen zeitkontinuierlichen Datenstrom vorgenommen. Diese Zerlegung wird von den Gatewayeinrichtungen GWA,GWB,GWC ausgeführt.

In einem mit dem paketvermittelnden Netzwerk LAN verbundenen Routingserver GK - einer zentralen Servereinheit - wird eine optimierte - nach verkehrstheoretischen Gesichtspunkten, nach Verbindungsqualität usw. bestimmte - Leitweglenkung der Datenpakete ermittelt, die von den jeweiligen Gatewayeinrichtungen GWA,GWB,GWC untereinander ausgetauscht werden. Hierzu tauscht die jeweilige Gatewayeinrichtung GWA,GWB,GWC - in der Zeichnung strichpunktiert für die erste Gatewayeinrichtung GWA dargestellt - mit dem Routingserver GK bidirektional Datenpakete aus, die Informationen im Zusammenhang mit der Leitweglenkung, sogenannte Routingdaten RD enthalten.

Die Kommunikationseinrichtungen PBA,PBB,PBC,PBXD arbeiten nach einem zeitschlitzorientierten Vermittlungsprinzip - in der Fachwelt oftmals als "Time Division Multiplex", TDM bezeichnet - und steuern die angeschlossenen Kommunikationsendpunkte über Signalisierungsinformationen.

Es sei im folgenden davon ausgegangen, dass eine Kommunikationsverbindung zwischen dem ersten und dem dritten Kommunikationsendpunkt KE1,KE3 aufzubauen sei.

In der Zeichnung sind - durch gepunktete Linien - ein erster - die erste und die dritte Gatewayeinrichtung GWA,GWC verbindender - und ein zweiter - die erste und die zweite Gatewayeinrichtung GWA,GWB verbindender - Leitweg LW1,LW2 dargestellt. Die Darstellung der Leitwege LW1,LW2 mit punktierten Linien ist aus Übersichtlichkeitsgründen auf das paketvermittelnde Netzwerk LAN beschränkt. Die Leitwege LW1,LW2 erstrecken sich ausgehend von der einem Kommunikationsendpunkt zugehörigen Kommunikationseinrichtung PBXA,PBXB,PBXC,PBXD zu der mit dem verbundenen Kommunikationsendpunkt zugehörigen Kommunikationseinrichtung PBXA,PBXB,PBXC,PBXD. Weiterhin illustriert die Darstellung der Leitwege LW1,LW2 nicht den tatsächlichen topologischen Weg einzelner Datenpakete durch das paketvermittelnde Netzwerk LAN sondern die Verbindung zwischen zwei Kommunikationspartnern. Die beiden Leitwege LW1,LW2 werden durch den Routingserver GK unter vorherigen Austausch von Routingdaten RD mit der ersten Gatewayeinrichtung GWA bestimmt. Die zweite und dritte Gatewayeinrichtung tauschen ebenfalls - nicht dargestellte - Routingdaten RD mit dem Routingserver GK aus.

Unter Verwendung des ersten Leitwegs LW1 werden getunnelte - Signalisierungs- und Nutzinformationen enthaltende - Kommunikationsdaten zwischen dem ersten und dem dritten Kommunikationsendpunkt KE1,KE3 zugehörigen Gatewayeinrichtungen GWA,GWC direkt ausgetauscht. An der dritten Gatewayeinrichtung GWB werden diese getunnelten Kommunikationsdaten in zeitkontinuierliche Nutz- und Signalisierungsinformationen umgesetzt und über die dritte Kommunikationseinrichtung PBXC an den dritten Kommunikationsendpunkt KE3 übergeben. In umgekehrter Richtung werden von der dritten Kommunikationseinrichtung PBXC zeitkontinuierliche Nutz- und Signalisierungsinformationen vom dritten Kommunikationsendpunkt KE3 an die dritte Gatewayeinrichtung GWC, und von dieser getunnelt - in Form von Datenpaketen - über das paketvermittelnde Netzwerk LAN an die erste Gatewayeinrichtung GWA übermittelt. Da die beiden Kommunikationsprotokolle N,NQ nicht konform miteinander sind, ergibt sich bei dieser Leitwegwahl durch den Routingserver GK keine Leistungsmerkmaltransparenz bei der Kommunikationsverbindung zwischen dem ersten und dritten Kommunikationsendpunkt KE1,KE3, da die von den der ersten und der dritten Kommunikationseinrichtung GWA, GWC verwendeten Signalisierungsinformationen nicht kompatibel sind.

Mit einer Verwendung des zweiten Leitwegs LW2 werden getunnelte - Signalisierungs- und Nutzinformationen enthaltende - Kommunikationsdaten zunächst zwischen der ersten und zweiten Gatewayeinrichtung GWA,GWB ausgetauscht. An der zweiten Gatewayeinrichtung GWB werden diese getunnelten Kommunikationsdaten wieder in zeitkontinuierliche Nutz- und Signalisierungsinformationen umgesetzt und an die zweite Kommunikationseinrichtung PBXB übergeben. Dort werden sie durch eine - nicht dargestellte - Schnittstelle in ein Signalisierungsinformationsformat konvertiert, dessen zugrundeliegendes Kommunikationsprotokoll auch an einer ähnlich ausgestalteten - nicht dargestellten - Schnittstelle in der dritten Kommunikationseinrichtung PBXC implementiert ist. Über eine Querverbindung QL werden die Kommunikationsdaten bidirektional zwischen beiden Kommunikationseinrichtungen PBXB,PBXC ausgetauscht. An der Kommunikationseinrichtung PBXC werden die über die über die Querverbindung QL empfangenen Kommunikationsdaten in das eigene Kommunikationsprotokoll NQ konvertiert und dem dritten Kommunikationsendpunkt KE3 übermittelt. In der Gegenrichtung erfolgen die entsprechenden Konversionen analog.

Somit ergibt sich durch die Wahl des zweiten Leitweges LW2 für die zwischen dem ersten und dem dritten Kommunikationsendpunkt KE1, KE3 ausgetauschten Datenpakete eine leistungsmerkmaltransparente Kommunikationsverbindung der Kommunikationsendpunkte KE1 und KE3.

Die Bestimmung des Leitweges LW2, der eine leistungsmerkmaltransparente Kommunikationsverbindung erfolgt durch den Routingserver GK. Ein Routingserver verwaltet Informationen für eine Leitweglenkung von Datenpaketen, die Daten von im Routingserver gespeicherten Leitwegetabellen berücksichtigen. In diese Leitwegetabellen wird erfindungsgemäß ein Eintrag über die implementierten Kommunikationsprotokolle der mit der Ziel- Gatewayeinrichtungen GWC verbundenen Kommunikationseinrichtungen, in dem Fall PBXC, vorgesehen. Ein Leitweg LW2, der bei einer Kommunikationsverbindung zweier Kommunikationsendpunkte KE1,KE3 über Gatewayeinrichtungen GWA,GWB zwei Kommunikationseinrichtungen PBXA,PBXB mit identischen - oder auch bezüglich des Formats ihrer Signalisierungsinformationen ähnlichen - Kommunikationsprotokollen miteinander verbindet und auf diese Weise eine leistungsmerkmaltransparente Kommunikationsverbindung ermöglicht, erhält eine vorrangige Priorität gegenüber anderen Kriterien wie Übertragungskapazität, Übertragungsqualität usw.

Mit dem bidirektionalen Austausch von Routingdaten RD zwischen dem Routingserver GK und den Gatewayeinrichtungen GWA,GWB,GWC - in der Zeichnung ist dieser Austausch aus Übersichtsgründen lediglich am Beispiel der ersten Gatewayeinrichtung GWA dargestellt - ist auch über den in der Zeichnung dargestellten ersten Leitweg LW1 eine leistungsmerkmaltransparente Verbindung des ersten Kommunikationsendpunktes KE1 mit dem dritten Kommunikationsendpunkt KE3 über die erste und dritte Gatewayeinrichtung GWA,GWC, die vierte Kommunikationseinrichtung PBXD und über die Querverbindung QL2 auf die dritte Kommunikationseinrichtung PBXC realisierbar. Die erfindungsgemäße Leitweglenkung beschränkt sich nicht nur auf einen Zielführung von Datenpaketen über das paketvermittelnde Netzwerk LAN, sondern beeinflusst auch die Zielführung des - in der jeweiligen Gatewayeinrichtung GWA,GWB,GWC aus Datenpaketen umgesetzten - kontinuierlichen Datenstroms. Die zwischen dem Routingserver GK und der ersten bzw. dritten Gatewayeinrichtung GWA,GWC ausgetauschten Routingdaten RD - in der Zeichnung lediglich zwischen der ersten Gatewayeinrichtung GWA und dem Routingserver GK dargestellt - enthalten für diesem alternativen ersten Leitweg LW1 eine Information zur Übermittlung des aus den Datenpaketen umgesetzten Datenstroms von der dritten Gatewayeinrichtung GWC an die vierte Kommunikationseinrichtung PBXD und umgekehrt. Die vierte Kommunikationseinrichtung besitzt ein mit der ersten Kommunikationseinrichtung PBXA identisches Kommunikationsprotokoll N. Mit dem alternativen ersten Leitweg LW1 ist über die Querverbindung QL2 somit analog zum zweiten Leitweg LW2 - hier über die Querverbindung QL1 - eine leistungsmerkmaltransparente Verbindung des ersten Kommunikationsendpunktes KE1 mit dem dritten Kommunikationsendpunkt KE3 realisierbar.

Die beschriebenen Verfahren der Leitweglenkung von Datenpaketen sind auch ohne Beteiligung eines Routingservers GK realisierbar, indem Teile von dessen Funktionalität durch eine entsprechend ausgestaltete Gatewayeinrichtung, z.B. durch die erste Gatewayeinrichtung GWA, ausgeführt werden.

## Patentansprüche

1. Verfahren zur Leitweglenkung von Kommunikationsdaten über paketvermittelnde Netzwerke (LAN) mit mehreren über Gatewayeinrichtungen (GWA,GWB,GWC) mit dem paketvermittelnden Netzwerk (LAN) verbundenen Kommunikationsnetzwerken (KNA,KNB,KNC,KND),
**dadurch gekennzeichnet,**
**dass** eine Leitweglenkung für zwischen den Kommunikationsnetzwerken (KNA,KNB,KNC,KND) zu übertragenden Kommunikationsdaten unter Berücksichtigung der in den jeweiligen Kommunikationsnetzwerken (KNA,KNB,KNC,KND) verwendeten Kommunikationsprotokollen (N,NQ) erfolgt.

2. Verfahren nach Anspruch 1,
**dadurch gekennzeichnet,**
**dass** die Leitweglenkung durch einen zentralen, die Gatewayeinrichtungen (GWA,GWB,GWC) steuernden Routingserver (GK) erfolgt.

3. Verfahren nach Anspruch 2,
**dadurch gekennzeichnet,**
**dass** im zentralen Routingserver (GK) Leitwegetabellen verwaltet werden, die Daten für eine dynamische und/oder statische Leitweglenkung enthalten.

4. Verfahren nach Anspruch 3,
**dadurch gekennzeichnet,**
**dass** die Leitwegetabellen einen Eintrag enthalten, der in den Kommunikationsnetzwerken (KNA,KNB,KNC,KND) verwendete Kommunikationsprotokolle (N,NQ) charakterisiert.

5. Verfahren nach einem der vorhergehenden Ansprüche,
**dadurch gekennzeichnet,**
**dass** die Leitweglenkung ausgehend von einem an ein erstes Kommunikationsnetzwerk (KNA) angeschlossenen ersten Kommunikationsendpunkt (KE1) zu einem an ein zweites Kommunikationsnetzwerk (KNB) angeschlossenen zweiten Kommunikationsendpunkt (KE2) bei gleichen Kommunikationsprotokollen (N,NQ) der beteiligten Kommunikationsnetzwerken (KNA,KNB) direkt von der ersten Gatewayeinrichtung (GWA) über das paketvermittelnde Netzwerk (LAN) an die dem zweiten Kommunikationsnetzwerk (KNB) zugeordneten zweiten Gatewayeinrichtung (GWB) erfolgt.

6. Verfahren nach einem der Ansprüche 1 bis 5,
**dadurch gekennzeichnet,**
**dass** die Leitweglenkung ausgehend von einem an ein erstes Kommunikationsnetzwerk (KNA) angeschlossenen ersten Kommunikationsendpunkt (KE1) zu einem an ein drittes Kommunikationsnetzwerk (KNC) angeschlossenen dritten Kommunikationsendpunkt (KE3),
wobei in dem ersten und dem dritten Kommunikationsnetzwerk (KNA,KNC) unterschiedliche Kommunikationsprotokollen (N,NQ) verwendet werden,
- über das paketvermittelnde Netzwerk (LAN) zu einem zweiten, ein mit dem ersten Kommunikationsnetzwerk (KNA) gleiches oder gleichartiges Kommunikationsprotokoll (N) aufweisendes Kommunikationsnetzwerk (KNB,KND) erfolgt, und
- anschließend eine Querverbindung (QL1,QL2) von dem mit dem ersten Kommunikationsnetzwerk (KNA) gleiches oder gleichartiges Kommunikationsprotokoll (N) aufweisenden Kommunikationsnetzwerk (KNB,KND) zum dritten Kommunikationsnetzwerk (KNC) erfolgt.

7. Verfahren nach einem der vorhergehenden Ansprüche,
**dadurch gekennzeichnet,**
**dass** die Leitweglenkung mit Hilfe der Gatewayeinrichtungen (GWA,GWB,GWC) unter Verwendung von Informationen aus dem Routingserver (GK) und/oder aus den übertragenen Datenpaketen erfolgt.

8. Verfahren nach einem der vorhergehenden Ansprüche,
**dadurch gekennzeichnet,**
**dass** die Leitweglenkung mit Hilfe von die Kommunikationsnetzwerke (KNA,KNB,KNC,KND) zentral steuernden Kommunikationseinrichtungen (PBXA,PBXB,PBXC,PBXD) erfolgt.

9. Verfahren nach einem der vorhergehenden Ansprüche,
**dadurch gekennzeichnet,**
**dass** Kommunikationsdaten der Kommunikationsnetzwerke (KNA,KNB,KNC,KND) über das paketvermittelnden Netzwerk (LAN) getunnelt werden.

10. Verfahren nach einem der vorhergehenden Ansprüche,
**dadurch gekennzeichnet,**
**dass** die jeweilige Gatewayeinrichtung (GWA,GWB,GWC) über mindestens eine zugehörige Kommunikationseinrichtung (PBXA,PBXB,PBXC,PBXD) mit dem entsprechenden Kommunikationsnetzwerk (KNA,KNB,KNC,KND) verbunden ist.

11. Verfahren nach einem der vorhergehenden Ansprüche,
**dadurch gekennzeichnet,**
**dass** die Kommunikationsprotokolle (N,NQ) ISDN-orientierten Standards entsprechen.

12. Verfahren nach einem der vorhergehenden Ansprüche,
**dadurch gekennzeichnet,**
**dass** die Kommunikationsdaten im paketvermittelnden Netzwerk (LAN) in Form von Datenpaketen gemäß eines Voice Over IP-Standards aufgebaut sind.

13. Verfahren nach Anspruch 12,
**dadurch gekennzeichnet,**
**dass** die Datenpakete gemäß des H.323-Standards aufgebaut sind.

14. Verfahren nach Anspruch 12,
**dadurch gekennzeichnet,**
**dass** die Datenpakete gemäß des SIP-Standards aufgebaut sind.

15. Verfahren nach einem der vorhergehenden Ansprüche,
**dadurch gekennzeichnet,**
**dass** die Leitweglenkung zwischen gleichen oder ähnlichen Kommunikationsprotokolle (N) aufweisenden Kommunikationsnetzwerken (PBXA,PBXB,PBXD) eine vorrangige Priorität besitzt.

16. Gatewayeinrichtung zur Leitweglenkung von Kommunikationsdaten über paketvermittelnde Netzwerke (LAN) mit mehreren über Gatewayeinrichtungen (GWA,GWB,GWC) mit dem paketvermittelnden Netzwerk (LAN) verbundenen Kommunikationsnetzwerken (KNA,KNB,KNC,KND),
**gekennzeichnet durch**,
Mittel zur eine Leitweglenkung für zwischen den Kommunikationsnetzwerken (KNA,KNB,KNC,KND) zu übertragenden Kommunikationsdaten unter Berücksichtigung der in den jeweiligen Kommunikationsnetzwerken (KNA,KNB,KNC,KND) verwendeten Kommunikationsprotokollen (N,NQ).

17. Gatewayeinrichtung nach Anspruch 16 zur Ausführung des Verfahrens nach einem der Ansprüche 7 bis 15.

## Claims

1. Method of routing communication data via packet switched networks (LAN) via gateway devices (GWA, GWB, GWC) connected to several communications networks (KNA,KNB,KNC,KND), is thereby **characterised in that** routing takes place between communication networks [KNA,KNB,KNC,KND) to transfer communication data, taking into account communication protocols (N, NQ) used in the actual communications networks (KNA, KNB, KNC, KND).

2. Method according to claim 1, is thereby **characterised in that** the routing takes place through a central routing server (GK), which in turn controls gateway devices (GWA, GWBrGWC).

3. Method according to claim 2, is thereby **characterised in that** within the central routing server (GK) routing tables are maintained, which contain data for a dynamic and/or static routing.

4. Method according to claim 3, is thereby **characterised in that** the routing tables contain an entry which characterises the communication protocols (Nf NQ) used in communications networks (KNA, KNB, KNC, KND).

5. Method according to any one of the preceding claims, is thereby **characterised in that** the routing takes place starting from a first communications network (KBA) connected to a first communication endpoint (KE1) to a second communications network (KNB) connected to a second communication endpoint (KE2) with the identical communication protocols (N, NQ) of the participating communications networks (KNA, KNB) directly from the first gateway device (GWA) via the packet switched network (LAN) to the second communications network (KNB) associated second gateway device (GWB).

6. Method according to any one of claims 1 to 5, is thereby **characterised in that** the routing starting from a first communications network (KNA) connected to the first communication endpoint (KE1) to a third communications network (KNC) connected to the third communication endpoint (KE3), whereby in the first and the third communications network (KNA, KNC) different communication protocols (N, NQ) are used,
- via the packet switched network (LAN) to a second, followed one with the first communications network (KNA) identical or similar communication protocol (N) having communications network (KNB,KND), and
- then a transverse connection (QL1,QL2) followed from the one with the first communication networks (KNA) identical or similar communication protocol (N) having communications network (KNB,KND) to the third communications network (KNC).

7. Method according to any one of the preceding claims, is thereby **characterised in that** the routing is done with the assistance of gateway devices (GWA,GWB,GWC) using information from the routing server (GK) and/or from the transmitted data packets.

8. Method according to any one of the preceding claims is thereby **characterised in that** the routing takes place by using the communications networks (KNA,KNB,KNC,KND) centrally controlled communication facilities (PBXA,PBXB,PBXC,PBXD).

9. Method according to any one of the preceding claims is thereby **characterised in that** communication data of the communications networks (KNA/KNB,KNC,KND) are tunnelled via the packet-switching network (LAN).

10. Method according to any one of the preceding claims is thereby **characterised in that** the respective gateway device (GWA,GWB,GWC) via at least one associated communication facility (PBXA,PBXB,PBXC,PBXD) is connected with the corresponding communications network (KNA/KNB,KNC,KND).

11. Method according to any one of the preceding claims is thereby **characterised in that** the communication protocols (N,NQ) correspond to ISDN-oriented standards.

12. Method according to any one of the preceding claims is thereby **characterised in that** the communication data in the packet-switched network (LAN) are constructed in form of data packets according to a Voice Over IP standards.

13. Method according to claim 12, is thereby **characterised in that** the data packets are constructed in accordance with the H.323 standard.

14. Method according to claim 12, is thereby **characterised in that** the data packets are constructed in accordance with the SIP standard.

15. Method according to any one of the preceding claims is thereby **characterised in that** the routing between communications networks (PBXA,PBXB,PBXD) with identical or similar communication protocols (N) have an overriding priority.

16. Gateway device for routing of communication data over packet switched networks (LAN) with multiple gateway devices (GWA, GWB, GWC) with the packet-switching network (LAN) connected to the communications networks (KNA, KNB, KNC,KND) **characterized by**; as means of routing for using communication protocols (N,NQ) between communications networks (KNA,KNB,KNC,KND) to transmit communications data taking account of the communications networks (KNA,KNB, KNC/KND),

17. Gateway device according to claim 16 for implementing the method according to any one of the claims 7 to 15.

## Revendications

1. Procédé servant à router des données de communication par des réseaux (LAN) à commutation de paquets comportant plusieurs réseaux de communication (KNA, KNB, KNC, KND) reliés au réseau (LAN) à commutation de paquets par l'intermédiaire de dispositifs passerelles (GWA, GWB, GWC),
**caractérisé en ce**
**qu'**un routage pour des données de communication à transmettre entre les réseaux de communication (KNA, KNB, KNC, KND) a lieu en tenant compte des protocoles de communication (N, NQ) utilisés dans chacun des réseaux de communication (KNA, KNB, KNC, KND).

2. Procédé selon la revendication 1,
**caractérisé en ce**
**que** le routage a lieu grâce à un serveur de routage (GK) central commandant les dispositifs passerelles (GWA, GWB, GWC).

3. Procédé selon la revendication 2,
**caractérisé en ce**
**que** des tables de routage sont administrées dans le serveur de routage (GK) central, lesquelles contiennent des données pour un routage dynamique et/ou statique.

4. Procédé selon la revendication 3,
**caractérisé en ce**
**que** les tables de routage contiennent une entrée, qui caractérise dans les réseaux de communication (KNA, KNB, KNC, KND) des protocoles de communication (N, NQ) utilisés.

5. Procédé selon l'une quelconque des revendications précédentes,
**caractérisé en ce**
**que** le routage a lieu en partant d'un premier point terminal de communication (KE1) connecté à un premier réseau de communication (KNA) en direction d'un deuxième point terminal de communication (KE2) connecté à un deuxième réseau de communication (KNB) dans le cas de protocoles de communication (N, NQ) identiques des réseaux de communication (KNA, KNB) concernés, directement depuis le premier dispositif passerelle (GWA) en passant par le réseau (LAN) à commutation de paquets vers le deuxième dispositif passerelle (GWB) associé au deuxième réseau de communication (KNB).

6. Procédé selon l'une quelconque des revendications 1 à 5,
**caractérisé en ce**
**que** le routage a lieu au départ d'un premier point terminal de communication (KE1) connecté à un premier réseau de communication (KNA) en direction d'un troisième point terminal de communication (KE3) connecté à un troisième réseau de communication (KNC),
sachant que différents protocoles de communication (N, NQ) sont utilisés dans le premier et dans le troisième réseau de communication (KNA, KNC),
- **que** le routage a lieu par l'intermédiaire du réseau (LAN) à commutation de paquets en direction d'un deuxième réseau de communication (KNB, KND) présentant un protocole de communication (N) identique au premier réseau de communication (KNA) ou du même type, et
- **qu'**ensuite une liaison transversale (QL1, QL2) a lieu depuis le réseau de communication (KNB, KND) présentant un protocole de communication (N) identique ou du même type que le premier réseau de communication (KNA) en direction du troisième réseau de communication (KNC).

7. Procédé selon l'une quelconque des revendications précédentes,
**caractérisé en ce**
**que** le routage a lieu à l'aide de dispositifs passerelles (GWA, GWB, GWC) en utilisant des informations issues du serveur de routage (GK) et/ou issues des paquets de données transmis.

8. Procédé selon l'une quelconque des revendications précédentes,
**caractérisé en ce**
**que** le routage a lieu à l'aide de dispositifs de communication (PBXA, PBXB, PBXC, PBXD) commandant de manière centrale les réseaux de communication (KNA, KNB, KNC, KND).

9. Procédé selon l'une quelconque des revendications précédentes,
**caractérisé en ce**
**que** des données de communication des réseaux de communication (KNA, KNB, KNC, KND) sont tunnelées par l'intermédiaire du réseau (LAN) à commutation de paquets.

10. Procédé selon l'une quelconque des revendications précédentes,
**caractérisé en ce**
**que** chaque dispositif passerelle (GWA, GWB, GWC) est relié au réseau de communication correspondant (KNA, KNB, KNC, KND) par l'intermédiaire au moins d'un dispositif de communication (PBXA, PBXB, PBXC, PBXD) associé.

11. Procédé selon l'une quelconque des revendications précédentes,
**caractérisé en ce**
**que** les protocoles de communication (N, NQ) correspondent à des normes orientées RNIS.

12. Procédé selon l'une quelconque des revendications précédentes,
**caractérisé en ce**
**que** les données de communication sont élaborées dans le réseau (LAN) à commutation de paquets sous la forme de paquets de données selon une norme relative à la VoIP (voix sur IP, Voice Over IP).

13. Procédé selon la revendication 12,
**caractérisé en ce**
**que** les paquets de données sont élaborés conformément à la norme H.323.

14. Procédé selon la revendication 12,
**caractérisé en ce**
**que** les paquets de données sont élaborés conformément à la norme SIP.

15. Procédé selon l'une quelconque des revendications précédentes,
**caractérisé en ce**
**que** le routage entre des réseaux de communication (PBXA, PBXB, PBXD) identiques ou de même type présentant des protocoles de communication (N) est prioritaire.

16. Dispositif passerelle servant à router des données de communication sur des réseaux (LAN) à commutation de paquets comportant plusieurs réseaux de communication (KNA, KNB, KNC, KND) reliés à un réseau (LAN) à commutation de paquets par l'intermédiaire de dispositifs passerelles (GWA, GWB, GWC),
**caractérisé par**
des moyens servant à un routage pour des données de communication à transmettre entre les réseaux de communication (KNA, KNB, KNC, KND), en tenant compte des protocoles de communication (N, NQ) utilisés dans chacun des réseaux de communication (KNA, KNB, KNC, KND).

17. Dispositif passerelle selon la revendication 16 servant à exécuter le procédé selon l'une quelconque des revendications 7 à 15.
